# EUROPEAN PATENT APPLICATION

(11) **EP 0 703 070 A1**
(43) Date of publication of application: **27.03.1996**
(21) Application number: 95114312.2
(22) Date of filing: 12.09.1995
(51) Int. Cl.: B32B 27/32, B29C 47/88

(54) **Transparent multi-layer polyolefin film and process for producing the same**

(30) Priority: 21.09.1994 JP 252793/94
(71) Applicant: SHOWA DENKO KABUSHIKIKAISHA, Tokyo-to (JP)
(72) Inventor: Tomita, Miyuki, c/o Showa Denko K.K., Kawasaki-ku, Kawasaki-shi, Kanagawa (JP); Yotsuyanagi, Junji, c/o Showa Denko K.K., Kawasaki-ku, Kawasaki-shi, Kanagawa (JP); Ezaki, Tomohiko, c/o Showa Denko K.K., Kawasaki-ku, Kawasaki-shi, Kanagawa (JP)
(74) Representative: Henkel, Feiler, Hänzel & Partner

(57) **Abstract**

A multi-layer polyolefin film comprising (1) a high-density polyethylene layer comprising a high-density polyethylene having a melting point of 122°C or higher at a temperature increasing rate of 10°C/min and a crystallization temperature of 110°C or higher at a temperature decreasing rate of 10°C/min, and (2) a polyolefin layer comprising a polyolefin having a crystallization temperature of 109°C or lower at a temperature decreasing rate of 10°C/min, the multi-layer polyolefin film being produced by the steps of: co-extruding the high-density polyethylene and the polyolefin to form a multi-layer film, and quenching the multi-layer film.

## Description

### FIELD OF THE INVENTION

The present invention relates to a multi-layer polyolefin film suitable for use in the fields of food and medicine, which is excellent in transparency, which is not lost even when subjected to a heat sterilization treatment at 121°C for 30 minutes, and good in dimensional stability even when subjected to a heat sterilization treatment at 121°C for 30 minutes. More specifically, the present invention relates to a multi-layer polyolefin film which can be used as a retort pouch for food, by laminating with a heat-resistant film, such as nylon and polyester, or an aluminum foil excellent in heat resistance and gas barrier properties, as well as light-shielding properties in case of an aluminum foil.

### BACKGROUND OF THE INVENTION

Many types of thermoplastic resin films are currently on the market as transparent films for packaging. As transparent films for food or medicine, high-pressure low-density polyethylene films and linear low-density polyethylene films are generally widely used. However, these films are poor in heat resistance, so that they can not withstand a heat sterilization treatment at 121°C for 30 minutes in themselves.

Polypropylene films are also excellent in transparency and high in strength, and therefore widely used. However, polypropylene resins require to be compounded with stabilizers such as antioxidants because of their poor oxidation resistance, light stability and heat stability, which makes it impossible to use them to contents requiring extraction characteristics, particularly food for babies and medicine, in some cases. Further, polypropylene films can not be used for packaging for cold or refrigeration storage because the polypropylene resins are poor in low-temperature characteristics and become brittle at low temperatures.

Polyethylene terephthalate films, which are transparent and high in strength, have the disadvantages of being poor in heat sealing property, and it is difficult to make a pouch.

High-density polyethylene is excellent in heat sealing property, heat sterilization characteristics and heat stability. Accordingly, it requires no aid of antioxidants and is excellent also in extraction characteristics. However, high-density polyethylene has a high crystallization rate, and therefore films having excellent transparency can be obtained if it is quenched with a chill roll, but those having dimensional stability cannot be obtained even if it is quenched with a chill roll.

### SUMMARY OF THE INVENTION

An object of the present invention to provide a multi-layer polyolefin film excellent in transparency and satisfying all characteristics (such as heat sealing property, heat sterilization characteristics, heat dimensional stability and extraction characteristics) as a film for packaging used in the fields of food and medicine.

Another object of the present invention is to provide a process for producing such a multi-layer polyolefin film.

Other objects and effects of the present invention will be apparent from the following description.

The present invention relates to a multi-layer polyolefin film comprising
(1) a high-density polyethylene layer comprising a high-density polyethylene having a melting point of 122°C or higher at a temperature increasing rate of 10°C/min and a crystallization temperature of 110°C or higher at a temperature decreasing rate of 10°C/min, and
(2) a polyolefin layer comprising a polyolefin having a crystallization temperature of 109°C or lower at a temperature decreasing rate of 10°C/min,
   the multi-layer polyolefin film being produced by the steps of:
   co-extruding said high-density polyethylene and the polyolefin to form a multi-layer film, and
   quenching the multi-layer film.

The present invention also relates to a process for producing a multi-layer polyolefin film, the process comprising the steps of:
co-extruding a high-density polyethylene having a melting point of 122°C or higher at a temperature increasing rate of 10°C/min and a crystallization temperature of 110°C or higher at a temperature decreasing rate of 10°C/min, and a polyolefin having a crystallization temperature of 109°C or lower at a temperature decreasing rate of 10°C/min to form a multi-layer film, and
quenching the multi-layer film.

### DETAILED DESCRIPTION OF THE INVENTION

The high-density polyethylene used in the present invention indicates a peak of melting point at 122°C or more, preferably 124°C or more, when measured at a temperature increasing rate of 10°C with a differential scanning calorimeter (DSC), and has a crystallization temperature of 110°C or more, when measured at a temperature decreasing rate of 10°C with a DSC. Further, the melt flow rate (MFR) of the high-density polyethylene measured according to JIS K-7210 at a temperature of 190°C and a load of 2.16 kg is preferably from 0.1 to 50 g/10min, more preferably from 0.5 to 10 g/10min.

A melting point of less than 122°C results in poor heat sterilization due to insufficient heat resistance. An MFR of less than 0.5 g/10min tends to result in poor formability because of low flowability in forming, and in poor transparency. When the MFR exceeds 10 g/10min, the formability is good, and transparent films can be obtained, but there are tendency that the strength is decreased. It is preferred from the viewpoint of extraction characteristics that no stabilizers such as antioxidants are added to the high-density polyethylene. While high-density polyethylene having a density ranging from 0.940 to 0.965 g/cm³ can generally be used, high-density polyethylene having a density of 0.940 to 0.950 g/cm³ is preferred in terms of easiness of operation. For the purpose of improving low-temperature heat sealing property or impact strength, the high-density polyethylene can be blended with ethylene-propylene rubber or a low-density ethylene-α-olefin copolymer in an amount of 90% by weight or less, preferably 50% or less, considering the heat resistance.

The polyolefin has a crystallization temperature of 109°C or lower when measured at a temperature decreasing rate of 10°C/minute with a DSC. Examples of the polyolefin include ethylene-α-olefin copolymers, low-density polyethylene, and ethylene-propylene random copolymers. In particular, low-density polyethylene having a density of 0.890 to 0.930 g/cm³ (e.g., high-pressure polyethylene, extremely low-density polyethylene, and linear low-density polyethylene) is preferred.

The melting point of the polyolefin is not particularly limited and is preferably 105°C or higher.

The high-density polyethylene and the polyolefin are co-extruded, and then quenched to produce the multi-layer polyolefin film according to the present invention. The co-extrusion is generally conducted at a temperature of from 190 to 300°C, preferably from 200 to 250°C. The multi-layer film may be further laminated with a resin that does not deteriorate the transparency and the heat resistant stability, if necessary. Examples of the resin which may be further laminated include polyethylene, polypropylene, nylon, and ethylene-vinyl alcohol copolymers. These resins may be laminated by using or not using an adhesive layer. The thickness of the layer of these resins is preferably from 0 to 50 µm.

In the process of the present invention, the quenching can be conducted by contacting a molten film thus co-extruded with a chill roll having a temperature of 10 to 60°C, preferably 20 to 50°C.

When contacting the molten film with a chill roll, it is preferred that the high-density polyethylene layer is made direct in contact with the chill roll. While depending on the thickness of the polyolefin layer, if the chill roll is made in contact with the polyolefin layer, the high-density polyethylene layer tends to be gradually cooled resulting in poor transparency.

If a high-density polyethylene layer is quenched with a chill roll having a low temperature of less than 10°C directly or even through the polyolefin layer, the difference in the crystal contraction between a portion brought into contact with the chill roll and a portion not brought into contact therewith is greatly developed. As a result, only a stiff multi-layer film having a very uneven surface is formed. If the temperature of the chill roll is elevated to higher than 60°C, an opaque film tends to be formed.

The multi-layer polyolefin film of the present invention preferably has a thickness of from 17 to 150 µm, more preferably from 17 to 100 µm. If the thickness is more than 150 µm, there tends to be problems in that uniform quenching is difficult to be attained and the transparency of the multi-layer film becomes poor. If the thickness is less than 17 µm, the strength of the multi-layer film tends to be insufficient and pin holes may be formed.

The thickness of the high-density polyethylene layer is generally from 2 to 100 µm, preferably from 2 to 50 µm, more preferably from 2 to 30 µm. If the thickness is more than 100 µm, the transparency tends to be poor on quenching, and particularly, when a chill roll is used for quenching, growth of crystalline on the side opposite to the side made in contact with the chill roll tends to occur, resulting in poor transparency.

When the high-density polyethylene layer has the above thickness range, the polyolefin layer preferably has a thickness of 15 µm or more. The thickness of the polyolefin layer may be the value obtained by subtracting the thickness of the high-density polyethylene layer from the desired total thickness of the multi-layer film. If the thickness of the polyolefin layer is less than 15 µm, problems tend to occur in that not only the moldability of the multi-layer film becomes unstable, but also the quenching rate of the high-density polyethylene layer becomes too high, resulting in poor surface smoothness and poor transparency.

The multi-layer polyolefin film of the present invention comprises at least the above high-density polyethylene layer and polyolefin layer being made in contact with each other. The high-density polyethylene layer and the polyolefin layer each may be a single layer or may have a multi-layer structure.

In the multi-layer polyolefin film of the present invention, a layer comprising various materials may be further laminated on the side opposite to the high-density polyethylene layer. Such a layer may be co-extruded or laminated through an adhesive such as an adhesive resin or laminated by using no adhesive. The material for such a layer is not particularly limited, and examples thereof include polyethylene, polypropylene, nylon, polyester, an aluminum foil, etc.

Various materials can be used as the adhesive in the present invention. Examples of adhesives for dry lamination include a polypropylene maleic anhydride adduct, a polyester-urethane resin, a polyester-epoxy-urethane resin, a polyurethane-polyester-epoxy resin, etc.

The multi-layer film of the present invention is preferably used for a container or package in the field of food and medicine by combining with a material excellent in heat resistance and shielding properties. For example, a laminate film comprising the multi-layer film of the present invention laminated with an oriented nylon film, a polyester film, or an aluminum foil can be used as a retort pouch for food.

In the case where the multi-layer film of the present invention used as a container or package of food or medicine, it is preferably used in such a manner that the high-density polyethylene layer is made in contact with the food or medicine to be contained.

The high-density polyethylene resins have a heat sealing property and satisfy characteristics such as the heat dimensional stability and the extraction characteristics even in heat sterilization treatment at 121°C for 30 minutes. However, it has been difficult to produce transparent films. The reason for this is that a quenched portion is greatly contracted in the interface of the quenched portion and a molten portion adjacent thereto, because of difficulty of inhibiting crystallization by quenching and the extremely high crystallization rate, which causes the unevenness to be produced on the surface, resulting in difficulty of obtaining a smooth film.

In the present invention, the multi-layer film excellent in transparency can be obtained by quenching in the state that the polyolefin having a low crystallization rate, i.e., a crystallization temperature of 109°C or lower at a temperature decreasing rate of 10°C/min, coexisted.

The mechanism of this has not been fully elucidated. However, it is considered that, when the high-density polyethylene layer having a high crystallization rate and a crystallization temperature of 110°C or higher is quenched with a chill roll with the resin layer having a low crystallization rate, the strain caused by crystal contraction taking place in the layer having a high crystallization rate is absorbed by the layer having a low crystallization rate, which enables stable cooling, thus obtaining a film that is transparent, smooth, and thermally sterilizable.

The present invention is described in more detail with reference to the following Examples and Comparative Examples, but the present invention should not be construed as being limited thereto.

### EXAMPLE 1

Resin 4 shown in Table 1 was used as the high-density polyethylene and Resin 1 (high-pressure low-density polyethylene) shown in Table 1 was used as the polyolefin resin.

By using two extruders having a diameter of 65 mm and an L/D ratio of 28, which were provided with metering type screws (revolutions of 150 rpm and 50 rpm), the polyolefin resin was supplied to the extruder of a revolution of 150 rpm, and the high-density polyethylene was supplied to the extruder of a revolution of 50 rpm. The resins were coextruded through a T-die having a width of 600 mm and a slit of 1 mm at a die temperature of 220°C. The extruded article was then formed at a take-up speed of 12.5 m/min while bringing the high-density polyethylene into contact with a chill roll having a temperature of 23°C to quench it. As a result, a multi-layer polyolefin film comprising a polyolefin layer having a thickness of 60 µm and a high-density polyethylene layer having a thickness of 20 µm was obtained.

An oriented nylon film having a thickness of 15 µm was dry-laminated to the resulting multi-layer polyolefin film on the side of the polyolefin layer through a layer of a two-liquid type urethane adhesive for dry lamination having a thickness of 2 µm.

Two sheets each having a dimension of 170 mm × 140 mm were obtained from the laminated film comprising the multilayer film and the stretched nylon film. The sheets were superimposed in such a manner that the high-density polyethylene layers were made in contact with each other. Three sides of the sheets were heat-sealed with a sealing width of 10 mm to prepare a container having one opening at the remaining side. 400 ml of water was put in the container and then the opening was heat-sealed with a sealing width of 10 mm to obtain a container filled with water.

The container filled with water was immersed in hot water at 121°C for 30 minutes to sterilized. The container was measured and evaluated for haze and appearance. The results obtained are shown in Table 2.

### EXAMPLE 2

The same procedures as in Example 1 were conducted except that Resin 2 (linear low-density polyethylene containing 8% by weight of butene as a comonomer) was used as the polyolefin. The resulting multi-layer film was evaluated in the same manner as in Example 1. The results obtained are shown in Table 2.

### COMPARATIVE EXAMPLE 1

The same procedures as in Example 1 were conducted except that Resin 3 (linear low-density polyethylene containing 7% by weight of butene as a comonomer) was used as the polyolefin. The resulting multi-layer film was evaluated in the same manner as in Example 1. The results obtained are shown in Table 2.

### COMPARATIVE EXAMPLE 2

The same procedures as in Example 1 were conducted except that Resin 2 was used instead of Resin 4 in Example 1. The resulting multi-layer film was evaluated in the same manner as in Example 1. The results obtained are shown in Table 2.

### EXAMPLE 3

Resin 4 shown in Table 1 was used as the high-density polyethylene and Resin 2 (linear low-density polyethylene containing 8% by weight of butene as a comonomer) shown in Table 1 was used as the polyolefin resin, and Resin 4 was used as a material for a layer provided on the side opposite to the high-density polyethylene layer.

By using three extruders having a diameter of 65 mm and an L/D ratio of 28, which were provided with metering type screws (revolutions of 150 rpm, 50 rpm, and 25 rpm), the polyolefin resin was supplied to the extruder of a revolution of 150 rpm, the high-density polyethylene was supplied to the extruder of a revolution of 50 rpm, and Resin 4 for a layer provided on the side opposite to the high-density polyethylene layer as supplied to the extruder of a revolution of 25 rpm. The resins were coextruded through a T-die having a width of 600 mm and a slit of 1 mm at a die temperature of 220°C. The extruded article was then formed at a take-up speed of 12.5 m/min while bringing it into contact with a chill roll having a temperature of 23°C to quench it. As a result, a multi-layer polyolefin film having a structure, high-density polyethylene (Resin 4)/polyolefin (Resin 2)/other laminated resin (Resin 4), having a thickness combination of 20 µm/60 µm/10 µm was obtained.

An oriented nylon film having a thickness of 15 µm was dry-laminated to the resulting multi-layer polyolefin film on the side of the high-density polyethylene layer (10 µm) through a layer of the adhesive same as in Example 1 having thickness of 2 µm.

The resulting laminated film was measured and evaluated for haze and appearance in the same manner as in Example 1. Before heat sterilization, the haze was 6.2% and the appearance was good. After heat sterilization, the haze was 11.4% and the appearance was good.

**TABLE 1**

| | Density (g/cm³) | MFR (g/10 min) | Crystallization Temperature (°C) | Melting Point (°C) |
|---|---|---|---|---|
| Resin 1 | 0.918 | 0.9 | 97 | 107 |
| Resin 2 | 0.916 | 1.1 | 103 | 121 |
| Resin 3 | 0.922 | 1.3 | 111 | 124 |
| Resin 4 | 0.948 | 3.3 | 116 | 132 |

**TABLE 2**

| | Example 1 | Example 2 | Comparative Example 1 | Comparative Example 2 |
|---|---|---|---|---|
| (Layer Structure) | | | | |
| Thickness: 60/20 (µm) | Resin 1/resin 4 | Resin 2/resin 4 | Resin 3/resin 4 | Resin 1/resin 2 |

| (Film Properties) | | | | |
|---|---|---|---|---|
| Before Heat Sterilization | | | | |
| Haze (%)^{*1} | 6.5 | 5.8 | 12.5 | 5.0 |
| Appearance of Film | Good | Good | Curled | Good |

| After Heat Sterilization^{*2} | | | | |
|---|---|---|---|---|
| Haze (%)^{*1} | 12.1 | 10.8 | 25.5 | Unmeasurable |
| Appearance of Film | Good | Good | Curled | Contracted (no trace of the original form) |

| | | | | |
|---|---|---|---|---|
| (*1) Haze (%): ASTM D-1003 | | | | |
| (*2) Heat sterilization conditions: 121°C, 30 minutes in water | | | | |

As described above, the multi-layer polyolefin film according to the present invention is a multi-layer polyolefin film using high-density polyethylene, and the polyolefin resin having a crystallization temperature of 109°C or lower is used in combination, whereby the film which is excellent in transparency and thermally sterilizable can be obtained.

Because the multi-layer polyolefin film of the present invention uses a high-density polyethylene which is excellent in low temperature characteristics, has a heat-sealing property, and can be used without any stabilizer for light and heat, the multi-layer polyolefin film of the present invention is useful as a heat-sealable packaging material for food and medical treatment requiring good extraction characteristics, heat sterilization, and the see-through of contents. A laminated product comprising the multi-layer polyolefin film of the present invention with an aluminum foil and the like material is useful as a packaging material for photographic materials and medicines requiring oxygen barrier properties and light shielding properties. Because these packaging materials are not expensive but are safe at a high temperature of about 120°C, and can be heat-sealed, these are also useful as a packaging material for an automated packaging machine.

While the invention has been described in detail and with reference to specific examples thereof, it will be apparent to one skilled in the art that various changes and modifications can be made therein without departing from the spirit and scope thereof.

## Claims

1. A multi-layer polyolefin film comprising
(1) a high-density polyethylene layer comprising a high-density polyethylene having a melting point of 122°C or higher at a temperature increasing rate of 10°C/min and a crystallization temperature of 110°C or higher at a temperature decreasing rate of 10°C/min, and
(2) a polyolefin layer comprising a polyolefin having a crystallization temperature of 109°C or lower at a temperature decreasing rate of 10°C/min,
said multi-layer polyolefin film being produced by the steps of:
co-extruding said high-density polyethylene and said polyolefin to form a multi-layer film, and
quenching said multi-layer film.

2. A multi-layer polyolefin film as claimed in claim 1, wherein said high-density polyethylene has a density of from 0.940 to 0.965 g/cm³.

3. A multi-layer polyolefin film as claimed in claim 1, wherein said high-density polyethylene has a melt flow rate of from 0.1 to 50 g/10min at a temperature of 190°C and a load of 2.16 kg, said multi-layer polyolefin film has a total thickness of from 17 to 150 µm, said high-density polyethylene layer has a thickness of from 2 to 100 µm, and said polyolefin layer has a thickness of 15 µm or more.

4. A multi-layer polyolefin film as claimed in claim 3, wherein said high-density polyethylene layer has a thickness of from 2 to 50 µm.

5. A multi-layer polyolefin film as claimed in claim 1, wherein said polyolefin is a low-density polyethylene.

6. A multi-layer polyolefin film as claimed in claim 5, wherein said low-density polyethylene has a density of from 0.890 to 0.930 g/cm³.

7. A multi-layer polyolefin film as claimed in claim 1, wherein said high-density polyethylene has a melting point of 124°C or higher at a temperature increasing rate of 10°C/min and a crystallization temperature of 110°C or higher at a temperature decreasing rate of 10°C/min.

8. A process for producing a multi-layer polyolefin film, said process comprising the steps of:
co-extruding a high-density polyethylene having a melting point of 122°C or higher at a temperature increasing rate of 10°C/min and a crystallization temperature of 110°C or higher at a temperature decreasing rate of 10°C/min, and a polyolefin having a crystallization temperature of 109°C or lower at a temperature decreasing rate of 10°C/min to form a multi-layer film, and
quenching said multi-layer film.

9. A process as claimed in claim 8, wherein said quenching step is conducted by contacting said multi-layer film with a chill roll having a temperature of from 10 to 60°C.

10. A process as claimed in claim 9, wherein said chill roll has a temperature of from 20 to 50°C.

11. A process as claimed in claim 8, wherein said high-density polyethylene has a density of from 0.940 to 0.965 g/cm³.

12. A process as claimed in claim 8, wherein said polyolefin is a low-density polyethylene.

13. A process as claimed in claim 12, wherein said low-density polyethylene has a density of from 0.890 to 0.930 g/cm³.

14. A process as claimed in claim 8, wherein said high-density polyethylene has a melting point of 124°C or higher at a temperature increasing rate of 10°C/min and a crystallization temperature of 110°C or higher at a temperature decreasing rate of 10°C/min.
